(19) Europäisches Patentamt
European Patent Office
Office européen des brevets

(11) EP 0 807 641 B1

(12) EUROPÄISCHE PATENTSCHRIFT

(45) Veröffentlichungstag und Bekanntmachung des Hinweises auf die Patenterteilung:
**16.08.2001 Patentblatt 2001/33**

(51) Int Cl.[7]: **C08F 110/10**, C08F 4/14

(21) Anmeldenummer: **97107812.6**

(22) Anmeldetag: **13.05.1997**

# (54) Verfahren zur Herstellung von mittelmolekularem, hochreaktivem Polyisobuten

Process for the preparation of medium molecular highly reactive polyisobutene

Procédé pour la préparation de polyisobutène de poids moléculaire moyen, hautement réactif

(84) Benannte Vertragsstaaten:
**AT BE DE ES FR GB IT NL SE**

(30) Priorität: **13.05.1996 DE 19619267**

(43) Veröffentlichungstag der Anmeldung:
**19.11.1997 Patentblatt 1997/47**

(73) Patentinhaber: **BASF AKTIENGESELLSCHAFT**
**67056 Ludwigshafen (DE)**

(72) Erfinder: **Rath, Hans Peter, Dr.**
**67269 Grünstadt (DE)**

(74) Vertreter: **Kinzebach, Werner, Dr. et al**
**Patentanwälte**
**Reitstötter, Kinzebach und Partner**
**Postfach 86 06 49**
**81633 München (DE)**

(56) Entgegenhaltungen:
**EP-A- 0 279 456**
**EP-A- 0 355 997**
**EP-A- 0 481 297**
**EP-A- 0 671 419**
**US-A- 5 408 018**
**US-A- 5 448 001**

Bemerkungen:
Die Akte enthält technische Angaben, die nach dem Eingang der Anmeldung eingereicht wurden und die nicht in dieser Patentschrift enthalten sind.

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 807 641 B1

## Beschreibung

Die vorliegende Erfindung betrifft ein Verfahren zur Herstellung von mittelmolekularem, hochreaktivem Polyisobuten mit einem mittleren Molekulargewicht $M_n$ im Bereich von 5.000 bis 80.000 Dalton und einem Gehalt an endständigen Doppelbindungen (Vinylidengruppen) von wenigstens 50 mol-% sowie die dadurch erhältlichen Polyisobutene.

Niedermolekulare und hochmolekulare Polyisobutene mit Molekulargewichten bis zu mehreren 100.000 Dalton sind seit langem bekannt. Ihre Herstellung wird beispielsweise in H. Güterbock: Polyisobutylen und Mischpolymerisate, S. 77 bis 104, Springer, Berlin 1959, beschrieben. Die zur Zeit erhältlichen Polyisobutene dieses Molekulargewichtsbereiches werden mit Hilfe von Lewis-Säure-Katalysatoren, wie Aluminiumchlorid, Aluminiumalkylchloriden oder Bortrifluorid, hergestellt und haben meist weniger als 10 Mol-% endständige Doppelbindungen (Vinylidengruppierungen) und Molekulargewichtsverteilungen (Dispersität $M_w/M_n$) im Bereich von 3 bis 7 für Molekulargewichte $M_n$ oberhalb 5.000.

Von diesen herkömmlichen Polyisobutenen sind die sogenannten hochreaktiven Polyisobutene zu unterscheiden, welche in der Regel mittlere Molmassen von 500 bis 5.000 Dalton und häufig einen Gehalt an Vinylidengruppierungen von über 60 Mol-% haben. Solche hochreaktiven Polyisobutene werden als Zwischenprodukte zur Herstellung von Additiven für Schmier- und Kraftstoffe verwendet, wie sie beispielsweise in DE-A 27 02 604 beschrieben sind. Zur Herstellung dieser Additive werden zunächst durch Reaktion der endständigen Doppelbindungen des Polyisobutens mit Maleinsäureanhydrid Polyisobuten-Maleinsäureanhydrid-Addukte, insbesondere Polyisobutenylbernsteinsäureanhydride, erzeugt, welche anschließend mit bestimmten Aminen oder Alkoholen zum Additiv umgesetzt werden. Da bei der Adduktbildung mit Maleinsäureanhydrid hauptsächlich die Vinylidendoppelbindungen reagieren, wohingegen die weiter im Innern der Makromoleküle liegenden Doppelbindungen je nach ihrer Lage im Makromolekül ohne die Zugabe von Halogenen zu keinem oder zu einem deutlich geringeren Umsatz führen, ist der Anteil an endständigen Doppelbindungen im Molekül ein wesentliches Qualitätskriterium für diesen Polyisobutentypus.

Über das Zustandekommen der Vinylidendoppelbindungen und die Isomerisierung der endständigen Doppelbindungen in den Isobutenmakromolekülen zu internen Doppelbindungen bestehen nach Puskas et al., J. Polymer Sci.: Symposium No. 56, 191 (1976) die im folgenden Formelschema wiedergegebenen Vorstellungen:

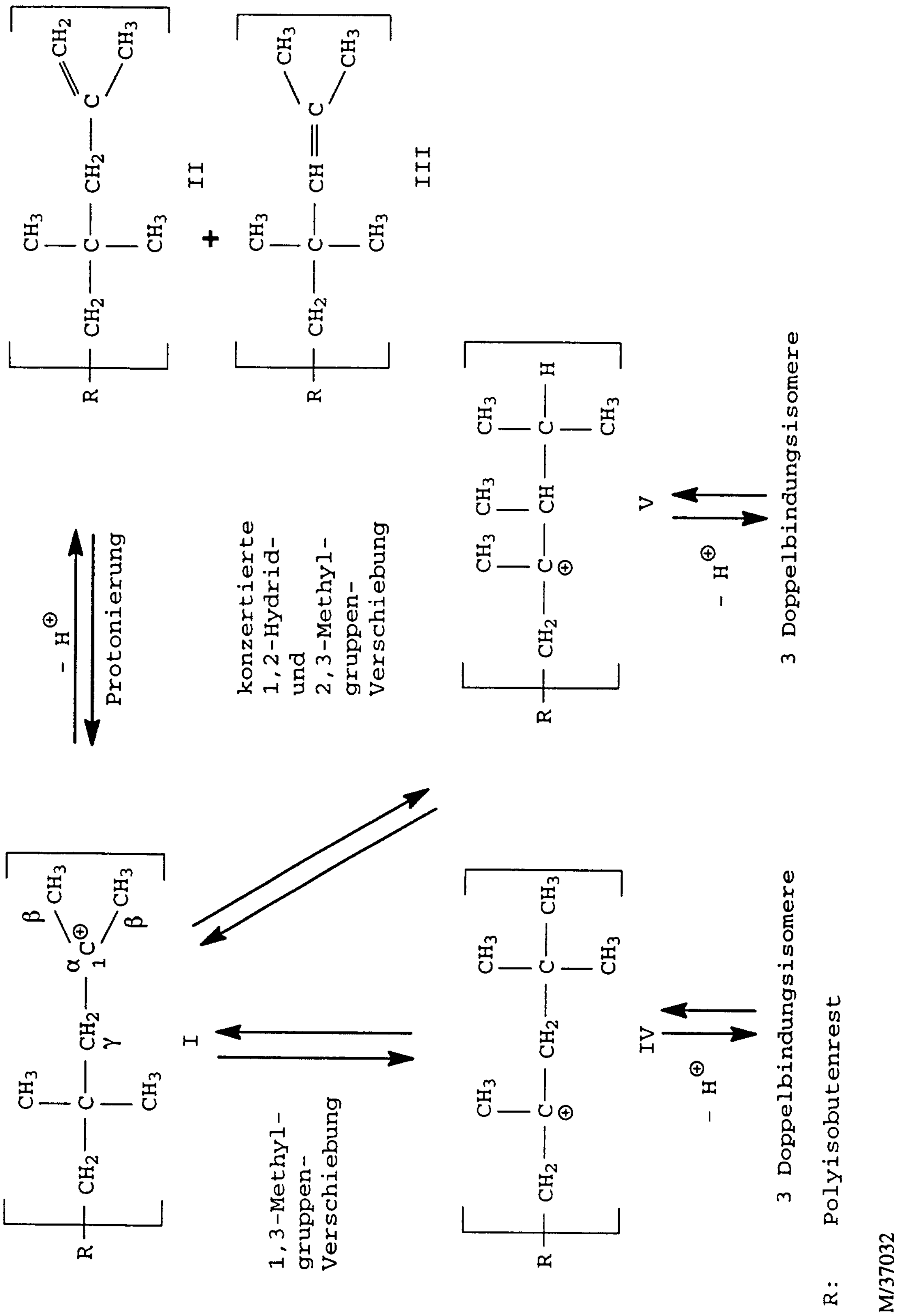


Das im Laufe der Polymerisationsreaktion entstehende Polyisobutenkation I kann durch die Abspaltung eines Protons in das betreffende Polyisobuten übergehen. Dabei kann das Proton sowohl aus einer der β-Methylgruppen oder aus der internen γ-Methylengruppe abgespalten werden. Je nachdem aus welcher dieser beiden Positionen das

Proton abgespalten wird, entsteht dabei ein Polyisobuten mit einer Vinylidendoppelbindung II oder mit einer trisubstituierten, nahe dem Ende des Moleküls befindlichen Doppelbindung III.

Das Polyisobutenkation I ist relativ instabil und versucht sich durch Umlagerung in höhersubstituierte Kationen zu stabilisieren. Dabei können sowohl 1,3-Methylgruppenverschiebungen zum Polyisobutenkation IV als auch sukzessive oder konzertierte 1,2-Hydrid- und 2,3-Methylgruppenverschiebungen zum Polyisobutenkation V stattfinden. Aus den Kationen IV und V können sich, je nachdem aus welcher Position das Proton abgespalten wird, jeweils drei verschiedene doppelbindungsisomere Polyisobutene bilden. Es besteht aber auch die Möglichkeit, daß sich die Kationen IV und V weiter umlagern, mit der Wirkung, daß die Doppelbindung noch weiter ins Innere des Polyisobutenmakromoleküls wandert.

Alle diese Deprotonierungen und Umlagerungen sind Gleichgewichtsreaktionen und somit reversibel, wobei allerdings letztendlich die Bildung stabilerer, höhersubstituierter Kationen und somit die Bildung von Polyisobutenen mit innenständiger Doppelbindung unter Einstellung des thermodynamischen Gleichgewichtes bevorzugt ist. Diese Deprotonierungen, Protonierungen und Umlagerungen werden durch gegebenenfalls im Reaktionsgemisch enthaltene Säurespuren, insbesondere jedoch vom zur Katalyse der Polymerisation benötigten Lewis-Säure-Katalysator selbst katalysiert. Aufgrund dieser Sachlage und da lediglich Polyisobutene mit Vinylidendoppelbindungen gemäß Formel II sehr gut unter Adduktbildung mit Maleinsäureanhydrid reagieren, Polyisobutene der Formel III im Vergleich dazu bereits eine deutlich verminderte Reaktivität haben und andere Polyisobutene mit höhersubstituierten Doppelbindungen gegenüber Maleinsäureanhydrid praktisch unreaktiv sind, wird das fortwährende Bemühen vieler Forschungsgruppen, verbesserte Verfahren zur Herstellung hochreaktiver Polyisobutene mit immer höheren Gehalten an endständigen Doppelbindungen zu finden, verständlich.

Die Herstellung von niedermolekularem, hochreaktivem Polyisobuten aus Isobuten oder Isobuten-haltigen Kohlenwasserstoffströmen, insbesondere aus von darin ursprünglich enthaltenem 1,3-Butadien weitgehend befreiten $C_4$-Schnitten aus Steamcrackern, FCC-Crackern (FCC:Fluid Catalyzed Cracking), sogenannten $C_4$-Raffinaten, ist aus einer Reihe von Schutzrechten bekannt, beispielsweise aus EP-A 145 235, EP-A 481 297, DE-A 27 02 604, EP-A 628 575, EP-A 322 241 und WO 93/10063.

Ein Nachteil dieser Verfahren ist, daß infolge der Verwendung eines $BF_3$-Komplex-Katalysators Fluor-haltige Nebenprodukte gebildet werden. Die Fluorgehalte der nach diesen Verfahren hergestellten Polyisobutene können bis zu 200 ppm betragen. Bei der thermischen Belastung dieser Fluor-haltigen Polyisobutene kommt es zur Abspaltung von Fluorwasserstoff, der in Gegenwart von Wasser stark korrosiv ist. Besonders gravierend ist dieses Problem bei der Verwendung von Isobuten-haltigen $C_4$-Schnitten als Ausgangsmaterial, da sich hierbei - aufgrund des Gehaltes an n-Butenen - relativ stabile sekundäre Fluoride des Polyisobutens bilden, welche dann bei der weiteren Derivatisierung des Polyisobutens zu Kraftstoff- und Schmieröladditiven oder bei der späteren Verwendung dieser Kraftstoffadditive im Motor unter Fluorwasserstoffbildung abgespalten werden können und dabei Korrosionsschäden verursachen. Das Korrosionsproblem erstreckt sich somit auch auf die Anwendung.

Beim Einsatz von $C_4$-Schnitten ist wiederum aufgrund der in diesen Kohlenwasserstoffströmen enthaltenen n-Butene mit deren Einbau in die wachsende Polymerkette zu rechnen. Hierdurch kommt es zum Abbruch der Polymerisation und die Selektivität für die Bildung hochreaktiven Polyisobutens, d.h. Polyisobuten mit einem hohen Gehalt an Vinylidendoppelbindungen, nimmt ab.

Während eine weitgehende Lösung der genannten Probleme für die Herstellung von niedermolekularem Polyisobuten mit Molmassen im Bereich von 500 bis 5.000 in der DE-A 195 20 078 beschrieben wird, ist eine Übertragbarkeit der dort angegebenen Verfahrensweisen auf die Herstellung von Polyisobuten mit Molmassen oberhalb 5.000 Dalton nicht zu erwarten. So scheitert in der Regel die Übertragung von Verfahren zur Herstellung niedermolekularer Polyisobutene auf höhermolekulare Polyisobutene an den niedrigen Isobutenumsätzen, der zunehmenden Lösungsviskosität sowie dem zusätzlichen Auftreten von Mischungslücken, was die Umsatzsteuerung insgesamt erschwert. Auch spielt die Monomerreinheit bei der Herstellung höhermolekularer Polymere, insbesondere bei der kationischen Polymerisation, eine weitaus größere Rolle als bei der Herstellung von niedermolekularen Polymeren.

Die WO 85/01942 beschreibt ein Verfahren zur Herstellung von Polyisobuten mit Molekulargewichten $M_n$ im Bereich von 100 bis 15.000, vorzugsweise 500 bis 5.000 Dalton und insbesondere im Bereich von 750 bis 2.500 Dalton. Das in Beispiel 1 erhaltene Polymer weist eine Molmasse $M_n$ = 955 Dalton auf. Anhand der für die anderen Beispiele angegebenen Schmelzviskositäten (bis 82 x $10^{-2}$ ssu ≈ 1,6 Pa.s bei 100°C) wurde als Obergrenze für die Molmassen der dort beschriebenen Polymere ein Wert von 1.500 Dalton abgeschätzt. Für die Herstellung von Polyisobuten mit Molmassen oberhalb 5.000 erweist sich das genannte Verfahren ebenfalls als nicht geeignet.

Der vorliegenden Erfindung liegt daher die Aufgabe zugrunde, ein Verfahren zur Herstellung von mittelmolekularem Polyisobuten mit einem hohen Gehalt an endständigen Doppelbindungen bereitzustellen. Weiterhin sollte durch das Verfahren auch die Herstellung von Polyisobutenen mit den genannten Eigenschaften aus Kohlenwasserstoffgemischen, beispielsweise $C_4$-Raffinaten, die noch polymerisierbare Verunreinigungen enthalten, erlauben. Darüber hinaus sollte das erhaltene Polyisobuten eine enge Molekulargewichtsverteilung besitzen.

Diese Aufgabe konnte überraschenderweise gelöst werden durch ein Verfahren zur Herstellung von mittelmolekularem, hochreaktivem Polyisobuten mit einem mittleren Molekulargewicht $M_n$ von mehr als 5000 und bis 80000 Dalton und einem Gehalt an endständigen Vinylgruppen von wenigstens 50 mol-% durch kationische Polymerisation von Isobuten oder isobutenhaltigen Kohlenwasserstoffgemischen in flüssiger, Phase in Gegenwart von Bortrifluorid-Komplex-Katalysatoren, aufgebaut aus Bortrifluorid A und wenigstens einer sauerstoffhaltigen verbindung B als Komplexbildner, ausgewählt unter Wasser, Alkoholen, Dialkylethern, Alkan carbonsäuren oder Phenolen, bei Temperaturen unterhalb von 0°C und einem Druck im Bereich von 0,5 bis 20 bar, das dadurch gekennzeichnet ist, daß man die Polymerisation einstufig bei einer stationären Isobuten-konzentration von 20 bis 80 Gew.-% und einer Bortrifluoridkonzentration von 50 bis 500 ppm, je weils bezogen auf den Reaktor inhalt, durchführt.

Das Ziel eines hohen Gehalts an endständigen Doppelbindungen und einer engen Molekulargewichtsverteilung wird erfindungsgemäß dadurch erreicht, daß man Isobuten oder Isobuten-haltige Kohlenwasserstoffgemische nach einem kontinuierlichen Verfahren bei stationären Isobutenkonzentrationen im Bereich von 20 bis 80 Gew.-%, vorzugsweise 30 bis 70 Gew.-%, bezogen auf den Reaktorinhalt, polymerisiert. Die Katalysatorkonzentration im Reaktor liegt dabei im Bereich von 50 bis 500 ppm (Gewichtsteile $BF_3$ bezogen auf den Reaktorinhalt). Die stationäre Konzentration der weiteren flüssigen Kohlenwasserstoffe kann dabei bis zu 60 Gew.-%, vorzugsweise 10 bis 40 Gew.-%, betragen. Die Polyisobutenkonzentration liegt in der Regel im Bereich von 10 bis 30 Gew.-%, jeweils bezogen auf den Reaktorinhalt. Als Einsatzstoffe (Isobuten-Feedstock) für das erfindungsgemäße Verfahren kommen sowohl Reinisobuten als auch Isobuten-haltige Kohlenwasserstoffmischungen, bei-spielsweise Butadien-freie $C_4$-Raffinate aus Crackern oder $C_4$-Schnitte der Isobutan-Dehydrierung mit Isobutengehalten oberhalb 40 Gew.-% in Frage. Die Isobuten-Konzentration im Reaktor kann durch die verwendete Kohlenwasserstoffmischung vorgegeben sein oder durch Zugabe von unter den Reaktionsbedingungen inerten Lösungsmitteln, wie gesättigten Kohlenwasserstoffen, beispielsweise Pentan, Hexan, Isooctan oder halogenierten Kohlenwasserstoffen, wie Dichlormethan oder Trichlormethan, eingestellt werden.

Als Katalysatoren werden im erfindungsgemäßen Verfahren Bortrifluorid-Komplexe mit Komplexbildnern verwendet, die die Polymerisationsaktivität des Bortrifluorids so beeinflussen, daß zum einen die Polymerisation ein niedermolekulares Polyisobuten ergibt und zum anderen die Isomerisierungsaktivität des Bortrifluorids hinsichtlich der Isomerisierung von endständigen zu im Inneren des Polyisobutenmoleküls gelegenen, nicht oder nur wenig reaktiven Doppelbindungen verringert wird. Geeignete Komplexbildner sind z.B. Wasser, $C_1$- bis $C_{20}$-Alkohole, Phenol, das gegebenenfalls einen oder mehrere Alkylsubstituenten trägt, $C_2$-bis $C_{10}$-Diole, $C_1$- bis $C_{20}$-Carbonsäuren sowie unsymmetrische $C_3$-bis $C_{20}$-Dialkylether, insbesondere solche mit mindestens einem, dem Ethersauerstoff benachbarten tertiären Kohlenstoff. Bevorzugt werden im erfindungsgemäßen Verfahren Komplexbildner aus der Klasse der $C_1$- bis $C_{20}$-Alkohole, insbesondere der $C_1$-$C_4$-Alkohole. Ether, wie sie in WO 93/10063 beschrieben sind, reagieren nach Spaltung über den Alkoholkomplex. Von den Alkoholen haben die einwertigen, sekundären $C_3$- bis $C_{20}$-Alkohole, wie sie in EP-A 628 575 beschrieben sind, als Komplexbildner einen besonders günstigen Einfluß auf die Polymerisations- und Isomerisierungsaktivität des Bortrifluorid-Katalysators, wobei Isopropanol und 2-Butanol besonders hervorzuheben sind. Vorzugsweise werden Bortrifluorid-Komplex-Katalysatoren im erfindungsgemäßen Verfahren eingesetzt, in denen das Molverhältnis Bortrifluorid/Komplexbildner A:B im Bereich von 1:1 bis 1:3, insbesondere von 1:1,05 bis 1:2,5 und besonders bevorzugt von 1:1,25 bis 1:2 beträgt. Wie bereits erwähnt, können die Bortrifluorid-Komplex-Katalysatoren vor ihrem Einsatz vorgeformt werden, wie dies z.B. in EP-A 145 235 beschrieben ist, oder in situ im Polymerisationsreaktor erzeugt werden, wie dies in EP-A 628 575 beschrieben ist. Als Rohstoff zur Herstellung der Bortrifluorid-Komplex-Katalysatoren wird zweckmäßigerweise gasförmiges Bortrifluorid benutzt, wobei technisches, noch geringe Mengen Schwefeldioxid enthaltendes Bortrifluorid (Reinheit: 96,5 Gew.-%), vorzugsweise aber hochreines Bortrifluorid (Reinheit: 99,5 Gew.-%) verwendet werden kann. Besonders bevorzugt wird Siliciumtetrafluorid-freies Bortrifluorid zur Katalysatorherstellung verwendet.

Erfindungsgemäß erfolgt die Polymerisation des Isobutens nach einem kontinuierlichen Verfahren. Dazu kann in an sich herkömmlichen Reaktoren, wie Rohrreaktoren, Rohrbündelreaktoren oder Rührkesseln gearbeitet werden. Vorzugsweise erfolgt die Polymerisation in einem Schlaufenreaktor, also einem Rohr- oder Rohrbündelreaktor mit stetigem Umlauf des Reaktionsgutes, wobei in der Regel das Verhältnis von Zulauf zu Umlauf Z/U im Bereich von 1:5 bis 1:500, vorzugsweise im Bereich von 1:10 bis 1:200 v/v, variiert werden kann.

Die Polymerisation erfolgt zweckmäßigerweise bei Temperaturen unterhalb 0°C. Um die gewünschten Polymereigenschaften zu erzielen, wird vorzugsweise bei Temperaturen im Bereich von 0 bis -40°C, insbesondere im Bereich von -10 bis -40°C und besonders bevorzugt im Bereich von -20 bis -40°C gearbeitet. In der Regel wird die Polymerisation bei einem Druck im Bereich von 0,5 bis 20 bar durchgeführt. Die Wahl des Druckbereichs richtet sich in erster Linie nach den verfahrenstechnischen Bedingungen. So empfiehlt es sich bei Rührkesseln, unter Siedekühlung und damit unter Eigendruck, d.h. Unterdruck, zu arbeiten, wohingegen Umlaufreaktoren (Schlaufenreaktoren) bei Überdruck besser arbeiten. Zugleich wird dort die Bortrifluorideinmischung beschleunigt, so daß dieser Reaktortyp bevorzugt ist. Auf das Resultat der Polymerisationsreaktion ist jedoch die Wahl des Druckes in der Regel unerheblich.

Vorzugsweise wird die Polymerisation unter isothermen Bedingungen durchgeführt. Da die Polymerisationsreaktion exotherm verläuft, muß in diesem Fall die Polymerisationswärme abgeführt werden. Dies geschieht in der

Regel mit Hilfe einer Kühlvorrichtung, die beispielsweise mit flüssigem Ammoniak als Kühlmittel betrieben werden kann. Eine andere Möglichkeit besteht darin, die Polymerisationswärme durch Siedekühlung auf der Produktseite des Reaktors abzuführen. Dies geschieht durch Verdampfung des Isobutens und/oder anderer, leicht flüchtiger Bestandteile des Isobuten-Feedstocks. Die Art der Kühlung hängt von dem jeweils verwendeten Reaktortyp ab. Rohrreaktoren werden vorzugsweise mittels Außenkühlung gekühlt, wobei die Reaktionsrohre beispielsweise mittels eines Kühlmantels mit siedendem Ammoniak gekühlt werden. Rührkesselreaktoren werden bevorzugt durch Innenkühlung, z.B. mittels Kühlschlangen, oder durch produktseitige Siedekühlung thermostatisiert.

Die Verweilzeit des zu polymerisierenden Isobutens im Reaktor liegt je nach Reaktionsbedingungen und gewünschten Eigenschaften des herzustellenden Polymerisats im Bereich von 1 bis 120 Minuten, vorzugsweise im Bereich von 8 bis 60 Minuten.

Für das Resultat der Reaktion hat es sich als besonders günstig erwiesen, die Reaktionsbedingungen und die Verweilzeit so zu kombinieren, daß der Isobutengehalt im Reaktoraustrag im Bereich von 30 bis 70 Gew.-%, bezogen auf den gesamten Reaktoraustrag, liegt. Das nicht umgesetzte Isobuten wird durch Aufarbeitung von den Reaktionsprodukten und den Katalysatoren abgetrennt und kann nach Entfernung von den durch die Aufarbeitung entstandenen Feuchtigkeitsspuren, beispielsweise durch Trocknen über Molekularsieb, in die Reaktion zurückgeführt werden.

Zur Aufarbeitung wird der Reaktionsaustrag zweckmäßigerweise in ein Medium geleitet, das den Polymerisationskatalysator desaktiviert und auf diese Weise die Polymerisation abbricht. Dazu können beispielsweise Wasser, Alkohole, Acetonitril, Ammoniak oder wäßrige Lösungen von Mineralbasen, wie Alkalimetall- und Erdalkalimetall-Hydroxidlösungen, Lösungen von Carbonaten dieser Metalle u.ä. verwendet werden. Bevorzugt wird Wasser mit einer Temperatur von 20 bis 40°C, beispielsweise in Form einer Druckwäsche eingesetzt. Im weiteren Gang der Aufarbeitung wird das Polymerisationsgemisch gegebenenfalls einer oder mehreren Extraktionen zur Entfernung von Restmengen an Katalysator - üblicherweise Methanol- oder Wasserwäschen - unterworfen. Bei der Wasserwäsche wird außer dem Katalysator auch im Zuge der Polymerisation entstandener Fluorwasserstoff entfernt. Anschließend werden destillativ nicht umgesetztes Isobuten, Lösungsmittel und flüchtige Isobutenoligomere abgetrennt. Der Sumpf wird von Resten des Lösungsmittels und Monomeren, beispielsweise über Ringspaltverdampfer oder durch Strangentgasung, befreit.

Wird Reinisobuten als Ausgangsstoff verwendet, kann dieses, ebenso wie Isobutenoligomere und Lösungsmittel, in die Polymerisation zurückgeführt werden. Bei Verwendung von isobutenhaltigen $C_4$-Schnitten werden das nichtumgesetzte Isobuten und die übrigen $C_4$-Kohlenwasserstoffe im allgemeinen nicht zurückgeführt, sondern anderen Verwendungen zugeführt, beispielsweise der Herstellung von niedermolekularem Polyisobuten oder von Methyl-t-butylether. Leichtflüchtige Fluor-haltige Nebenprodukte, wie sek.-Butylfluorid, können vom Polyisobuten zusammen mit den anderen Kohlenwasserstoffen entfernt und destillativ oder extraktiv von diesen Kohlenwasserstoffen abgetrennt werden.

Das erfindungsgemäße Verfahren ermöglicht es, mittelmolekulare, hochreaktive Polyisobutene sowohl aus Reinisobuten als auch aus isobutenhaltigen Kohlenwasserstoffgemischen herzustellen. Durch das erfindungsgemäße Verfahren können Molekulargewichte im Bereich von 5.000 bis 80.000 Dalton, vorzugsweise 8.000 bis 25.000 Dalton, bei einem Gehalt an endständigen Doppelbindungen von 50 mol-%, vorzugsweise oberhalb 70 mol-%, insbesondere oberhalb 80 mol-% bei hoher Isobutenausbeute erzielt werden. Darüber hinaus sind die erhaltenen Polyisobutene durch eine enge Molekulargewichtsverteilung charakterisiert. Sie weisen vorzugsweise eine Dispersität $M_w/M_n$ im Bereich von 2 bis 4, insbesondere von 2 bis 3, auf. Die Schmelzviskosität der erfindungsgemäß erhältlichen Polyisobutene liegt oberhalb 30 Pa·s (bei 100°C). Die kinematische Lösungsviskosität $\eta$ (bestimmt als Ubbelohdeviskosität in 2,2,4-Trimethylpentan bei 20°C, siehe DIN 51562) liegt im Bereich von 0,88 $mm^2/s$ (1 gew.-%ige Lösung) bis 1 $mm^2/s$ (0,2 gew.-%ige Lösung).

Aufgrund des hohen Gehalts an endständigen Doppelbindungen sind die erfindungsgemäßen Polymere insbesondere für polymeranaloge Umsetzungen brauchbar. Die erfindungsgemäßen Polyisobutene eignen sich als Additive für Schmierstoffe, die ebenfalls Gegenstand der vorliegenden Anmeldung sind, als Dichtungs- und Versiegelungsmassen für Isolierverglasungen sowie als Grundlage für Kaugummis. Diese können z.B. auch als Träger für Arzneimittelwirkstoffe, wie Appetitzügler, Nikotin etc., verwendet werden.

Beispiele

Die mittleren Molmassen ($M_n$) der gemäß den Beispielen hergestellten Polymeren wurden mittels Gelpermeationschromatographie (GPC) bestimmt, wobei standardisierte Polyisobutene zur Eichung verwendet wurden. Aus den erhaltenen Chromatogrammen wurde das Zahlenmittel $M_n$ nach der Gleichung

$$M_n = \frac{\Sigma c_i}{\Sigma \frac{c_i}{M_i}}$$

berechnet, in der $c_i$ für die Konzentration der einzelnen Polymerspecies i im erhaltenen Polymergemisch steht und in der $M_i$ das Molekulargewicht der einzelnen Polymerspecies i bedeutet. Die Molekulargewichtsverteilung, im folgenden als Dispersizität D bezeichnet, wurde aus dem Verhältnis von Gewichtsmittel des Molekulargewichts ($M_w$) und Zahlenmittel des Molekulargewichts ($M_n$) nach der Gleichung

$$\frac{M_w}{M_n} = D$$

errechnet. Das Gewichtsmittel $M_w$ wurde aus den erhaltenen Chromatogrammen mit Hilfe der Formel

$$M_w = \frac{\Sigma c_i M_i}{\Sigma c_i}$$

bestimmt.

Der Gehalt an organisch gebundenem Fluor in der Polymerisationslösung als auch im Polyisobuten wurde nach herkömmlichen elementaranalytischen Methoden bestimmt: Dazu wurde das organische Material durch Verbrennungsaufschluß nach Wickbold oder Schöniger aufgeschlossen, das dabei freigesetzte Fluorid in Wasser absorbiert und der Fluoridgehalt der erhaltenen wäßrigen Fluoridlösung potentiometrisch mit Hilfe handelsüblicher, für Fluoridionen selektiven Elektroden anhand einer Eichkurve bestimmt. Aus dem so gemessenen Fluoridgehalt der Lösung und der zur Verbrennung eingesetzten Probenmenge läßt sich der Gehalt an organisch gebundenem Fluorid in der Probe einfach errechnen (Lit.: F. Ehrenberger: Quantitative Elementaranalyse; VCH Verlagsgesellschaft, Weinheim, S. 436 ff, S. 424 ff, S. 617 ff).

Herstellung von Polyisobuten

Beispiel 1

In einem Schlaufenreaktor aus einer Umwälzpumpe und 6,8 m Teflonschlauch mit 6 mm Innendurchmesser und einem Gesamtvolumen von 200 ml wurde bei einer Reaktortemperatur von -20°C, einem Bortrifluoridzulauf von 3 mmol/h, einem Isopropanolzulauf von 4,1 mmol/h und einem Z/U-Verhältnis von 1:100 folgende stationären Konzentrationen eingestellt:

Isobuten: 48 Gew.-%.
Hexan: 30 Gew.-%.
Polyisobuten: 22 Gew.-%.

Die Verweilzeit betrug 9,8 sec. pro Umlauf. In der Austragsleitung, die sich 2 cm vor der Zuführung befand, wurde durch Zugabe von 100 ml/h Wasser die Reaktion abgebrochen. Nach einer mehrstufigen Druckwäsche bei 20°C wurden die organischen Phasen entspannt und auf 220°C erwärmt. Die flüchtigen Kohlenwasserstoffe wurden an einem Trockeneiskühler kondensiert. Umgesetztes Isobuten sowie Hexanverluste wurden ergänzt, die Mischung über einem 3 Å Molsieb mit einer Verweilzeit von 5 min. getrocknet und in den Reaktor zurückgeführt. Der farblose Destillationsrückstand enthielt Isobuten mit einer Molmasse $M_n$ von 16.000 und einer Dispersizität D von 2,2 bei einem Fluorgehalt von unterhalb 3 ppm.

Beispiel 2

In einer Apparatur gemäß Beispiel 1 wurde ein 50%iges Isobuten aus der der Isobutandehydrierung bei -30°C polymerisiert. Durch einen Bortrifluoridzulauf von 2,2 mmol/h und einem Isopropanolzulauf von 2,9 mmol/h wurde bei einem Z/U-Verhältnis von 1:100 und einer Verweilzeit von 9,8 sec. eine stationäre Isobutenkonzentration von 40 Gew.-% eingestellt. Die Aufarbeitung erfolgte wie in Beispiel 1 beschrieben, jedoch wurde auf eine Rückführung des unumgesetzten Isobutens verzichtet. Der farblose Destillationsrückstand enthielt ein Isobuten mit einer Molmasse $M_n$ von

14.000 und einer Dispersizität D von 2,4 bei einem Fluorgehalt unterhalb 3 ppm.
135/hz

**Patentansprüche**

1. Verfahren zur Herstellung von mittelmolekularem, hochreaktivem Polyisobuten mit einem mittleren Molekulargewicht $M_n$ von mehr als 5.000 und bis 80.000 Dalton und einem Gehalt an endständigen Doppelbindungen von wenigstens 50 mol-% durch kationische Polymerisation von Isobuten oder isobutenhaltigen Kohlenwasserstoffgemischen in flüssiger Phase in Gegenwart von Bortrifluorid-Komplex-Katalysatoren, aufgebaut aus Bortrifluorid A und wenigstens einer sauerstoffhaltigen Verbindung B als Komplexbildner, ausgewählt unter Wasser, Alkoholen, Dialkylethern, Alkancarbonsäuren oder Phenolen, bei Temperaturen unterhalb von 0°C und einem Druck im Bereich von 0,5 bis 20 bar, dadurch gekennzeichnet, daß man die Polymerisation einstufig bei einer stationären Isobutenkonzentration von 20 bis 80 Gew.-% und einer Bortrifluoridkonzentration von 50 bis 500 ppm, jeweils bezogen auf den Reaktorinhalt, durchführt.

2. Verfahren gemäß Anspruch 1, dadurch gekennzeichnet, daß die Isobutenkonzentration im Reaktoraustrag im Bereich von 30 bis 70 Gew.-% liegt.

3. Verfahren nach einem der vorhergehenden Ansprüche, dadurch gekennzeichnet, daß die Polymerisation nach einem Umlauf-Verfahren mit einem Zulauf-/Umlaufverhältnis Z/U im Bereich von 1:5 bis 1:500 (v/v) durchgeführt wird.

4. Verfahren nach einem der vorhergehenden Ansprüche, dadurch gekennzeichnet, daß der Komplex aus Bortrifluorid A und Komplexbildner B in situ generiert wird, wobei das Molverhältnis A:B im Bereich von 1:1 bis 1:3 liegt.

5. Verfahren nach einem der vorhergehenden Ansprüche, dadurch gekennzeichnet, daß man als Bortrifluorid-Komplex-Katalysator einen Komplex aus Bortrifluorid und Isopropanol oder 2-Butanol einsetzt.

6. Polyisobutene mit einer Dispersität $M_w/M_n$ im Bereich von 2 bis 4, erhältlich durch ein Verfahren nach einem der Ansprüche 1 bis 5.

7. Verwendung der Polyisobutene aus Anspruch 6 als Schmierstoffadditive.

8. Schmierstoffe, enthaltend wenigstens ein Polyisobuten aus Anspruch 6.
135/ew

**Claims**

1. A process for the preparation of medium molecular weight, highly reactive polyisobutene having an average molecular weight $M_n$ of more than 5000 and up to 80,000 dalton and containing at least 50 mol% of terminal double bonds by cationic polymerization of isobutene or an isobutene-containing hydrocarbon mixture in the liquid phase in the presence of a boron trifluoride complex catalyst, composed of boron trifluoride A and at least one oxygen-containing compound B as complexing agent, selected from water, alcohols, dialkyl ethers, alkanecarboxylic acids and phenols, at below 0°C and from 0.5 to 20 bar, wherein the polymerization is carried out in one stage at a steady-state isobutene concentration of from 20 to 80% by weight and a boron trifluoride concentration of from 50 to 500 ppm, based in each case on the reactor content.

2. A process as claimed in claim 1, wherein the isobutene concentration in the reactor discharge is from 30 to 70% by weight.

3. A process as claimed in any of the preceding claims, wherein the polymerization is carried out by a circulation method with a feed/circulation ratio F/C of from 1:5 to 1:500 (v/v).

4. A process as claimed in any of the preceding claims, wherein the complex of boron trifluoride A and complexing agent B is generated in situ, the molar ratio A:B being from 1:1 to 1:3.

5. A process as claimed in any of the preceding claims, wherein the boron trifluoride complex catalyst used is a complex of boron trifluoride and isopropanol or 2-butanol.

6. A polyisobutene having a dispersity $M_w/M_n$ of from 2 to 4, obtainable by a process as claimed in any of claims 1 to 5.

7. The use of a polyisobutene as claimed in claim 6 as a lubricant additive.

8. A lubricant containing at least one polyisobutene as claimed in claim 6.

**Revendications**

1. Procédé de préparation de polyisobutène hautement réactif à poids moléculaire moyen, d'un poids moléculaire moyen $M_n$ de plus de 5.000 et jusqu'à 80.000 Dalton et d'une teneur en doubles liaisons terminales d'au moins 50% molaires, par polymérisation cationique d'isobutène ou de mélanges d'hydrocarbures contenant de l'isobutène, en phase liquide, en présence de catalyseurs de complexe de trifluorure de bore, constitués de trifluorure de bore A et d'au moins un composé oxygéné B en tant que complexant, choisi parmi l'eau, des alcools, des dialkyléthers, des acides alcane-carboxyliques ou des phénols, à des températures inférieures à 0°C et sous une pression de l'ordre de 0,5 à 20 bar, caractérisé en ce que l'on entreprend la polymérisation en une seule étape avec une concentration stationnaire d'isobutène de 20 à 80% en poids et une concentration de trifluorure de bore de 50 à 500 ppm, à chaque fois par rapport au contenu du réacteur.

2. Procédé selon la revendication 1, caractérisé en ce que la concentration d'isobutène dans le produit de sortie du réacteur est de l'ordre de 30 à 70% en poids.

3. Procédé selon l'une des revendications qui précèdent, caractérisé en ce que la polymérisation est entreprise par un procédé à circulation avec une proportion amenée/circulation A/C de l'ordre de 1:5 à 1:500 (v/v).

4. Procédé selon l'une des revendications qui précèdent, caractérisé en ce que le complexe de trifluorure de bore A et l'agent complexant B sont générés in situ, la proportion molaire A:B étant de l'ordre de 1:1 à 1:3.

5. Procédé selon l'une des revendications qui précèdent, caractérisé en ce que l'on met en oeuvre, en tant que catalyseur de complexe de trifluorure de bore, un complexe de trifluorure de bore et d'isopropanol ou de 2-butanol.

6. Polyisobutène d'une dispersivité $M_w/M_n$ de l'ordre de 2 à 4, que l'on peut obtenir par un procédé selon l'une des revendications 1 à 5.

7. Utilisation du polyisobutène selon la revendication 6 comme additif pour lubrifiants.

8. Lubrifiants contenant au moins un polyisobutène selon la revendication 6.